# EUROPEAN PATENT SPECIFICATION

(11) **EP 1 553 462 B1**
(45) Date of publication and mention of the grant of the patent: **30.12.2015**
(21) Application number: 05000256.7
(22) Date of filing: 07.01.2005
(51) Int. Cl.: G03G 15/01, G03G 21/18

(54) **Colour image forming apparatus with different monochrome printing modes**
Farbbilderzeugungsgerät mit verschiedenen monochromen Druckmodi
Appareil de formation d'images avec modes différents d'impression monochrome

(30) Priority: 09.01.2004 JP 2004004117; 15.12.2004 JP 2004362868
(43) Date of publication of application: 13.07.2005
(73) Proprietor: CANON KABUSHIKI KAISHA, Tokyo (JP)
(72) Inventor: Agata, Shinichi, Ohta-ku, Tokyo (JP); Yamamoto, Shinya, Ohta-ku, Tokyo (JP); Matsuda, Kohei, Ohta-ku, Tokyo (JP)
(74) Representative: TBK

(56) References cited:
- US-A1- 2001 046 393
- US-A1- 2001 046 493
- US-A1- 2003 138 270

## Description

### FIELD OF THE INVENTION AND RELATED ART

The present invention relates to an electrophotographic color image forming apparatus in which process cartridges are removably mountable.

As examples of an electrophotographic color image forming apparatus, an electrophotographic copying machine, an electrophotographic printer (for example, LED printer, laser beam printer, etc.), an electrophotographic facsimileing machine, an electrophotographic wordprocessor, etc., which form images with the use of an electrophotographic image forming method, are included.

A process cartridge is a cartridge in which at least a developing means and an electrophotographic drum are integrally disposed, and which is removably mountable in the main assembly of an electrophotographic color image forming apparatus.

As an example of an electrophotographic color image forming apparatus, there is an electrophotographic color image forming apparatus of the inline type, which generally uses the following image forming method: First, four color toner images are formed of cyan, yellow, magenta, and black developers (which hereinafter may sometimes be referred to as cyan, yellow, magenta, and black toners, respectively), one for one, on four photosensitive drums, as electrophotographic members, one for one, which are disposed so that they perfectly overlap in the direction parallel to the direction in which a recording medium is conveyed by a conveyer belt while remaining electrostatically adhered to the conveyer belt. The color toner images formed on these photosensitive drums are sequentially transferred onto the recording medium.

When forming a monochromatic image, which usually is an image of black color, with the use of an electrophotographic color image forming apparatus of the abovementioned inline type, only the photosensitive drum for forming a monochromatic image of a desired color, needs to be placed in contact with the conveyer belt. In other words, placing the photosensitive drums for forming the images of other colors (non-black) in contact with the conveyer belt is problematic in that as the photosensitive drums rotate in contact with the conveyer belt, their service lives shorten. For the purpose of solving this kind of problem, some electrophotographic color image forming apparatuses are structured so that when forming a monochromatic image, the three photosensitive drums for forming the monochromatic images other than the one for forming the monochromatic image, are kept separated from the electrostatic conveyer belt (Japanese Laid-open Patent Application 13-305818).

However, the structural arrangements in accordance with the prior art suffer from the following problem. That is, if the photosensitive drums, which are unnecessary for the formation of a monochromatic image of a given color, are kept separated from the conveyer belt, the electrostatic conveyer belt sometimes fail to precisely convey nonstandard recording medium (for example, thick paper, short envelop or post card, etc.). In other words, when conveying the abovementioned nonstandard recording mediums, the electrostatic force, alone, from the conveyer belt is insufficient to precisely convey these nonstandard recording mediums, and therefore, it is possible that the nonstandard recording mediums will be conveyed at a speed less than a predetermined recording medium conveyance speed, and/or the recording mediums will be conveyed askew, which in turns makes it possible for an image to fail to be transferred onto a predetermined location on the recording medium.

Document US 2001/046393 A1 discloses an image forming apparatus including a plurality of process stations vertically arranged each of which includes an image bearing member on which a latent image is to be formed and a developing device for developing the latent image, image bearing member driving devices, for driving the image bearing members, development driving devices, for driving the developing devices, and a transfer material bearing and conveying device for bearing and conveying the transfer material. While the transfer member is vertically conveyed through transfer nips that are formed by the transfer material bearing and conveying device and the image bearing members of all of the plurality of process stations, images formed by the plurality of process stations are sequentially transferred to the transfer material to form an image. Process stations to be used for image forming can be selected, and the image bearing member driving devices and the development driving devices are controlled, so that, during an image forming process, the image bearing members of the process stations that are not used for image forming are driven, while the developing devices thereof are halted.

### SUMMARY OF THE INVENTION

It is an object of the present invention to provide an improved electrophotographic color image forming apparatus allowing to increase a lifetime of components.

This object is achieved by an electrophotographic color image forming apparatus according to claim 1. Advantageous further developments are as set forth in the dependent claims.

According to one aspect, there is provided an electrophotographic color image forming apparatus capable of accommodating more types of recording media than an electrophotographic color image forming apparatus in accordance with the prior art.

According to another aspect, there is provided an electrophotographic color image forming apparatus capable of switching the recording medium conveying method, in accordance with the type of a recording medium used for image formation, in order to precisely convey a recording medium.

According to another aspect, there is provided an electrophotographic color image forming apparatus capable of switching the recording medium conveying method in accordance with the type of a recording medium used for image formation, in order to precisely form an image on a recording medium.

According to another aspect, there is provided an electrophotographic color image forming apparatus capable of making an electrophotographic photosensitive drum and a development roller last longer than an image forming apparatus in accordance with the prior.

According to another aspect, there is provided an electrophotographic color image forming apparatus capable of precisely transferring images onto a recording medium.

These and other objects, features, and advantages of the present invention will become more apparent upon consideration of the following description of the preferred embodiments of the present invention, taken in conjunction with the accompanying drawings.

### BRIEF DESCRIPTION OF THE DRAWINGS

Figure 1 is a schematic sectional drawing of the electrophotographic image forming apparatus in accordance with the present invention, showing the general structure thereof.
Figure 2 is a schematic sectional drawing of the transferring portion of the electrophotographic image forming apparatus in accordance with the present invention, showing the general structure thereof.
Figure 3 is a schematic sectional drawing of the process cartridge for the electrophotographic image forming apparatus in accordance with the present invention, showing the general structure thereof.
Figure 4 is a schematic sectional drawing of the electrophotographic image forming apparatus in accordance with the present invention, in the first monochromatic mode, showing the general structure thereof.

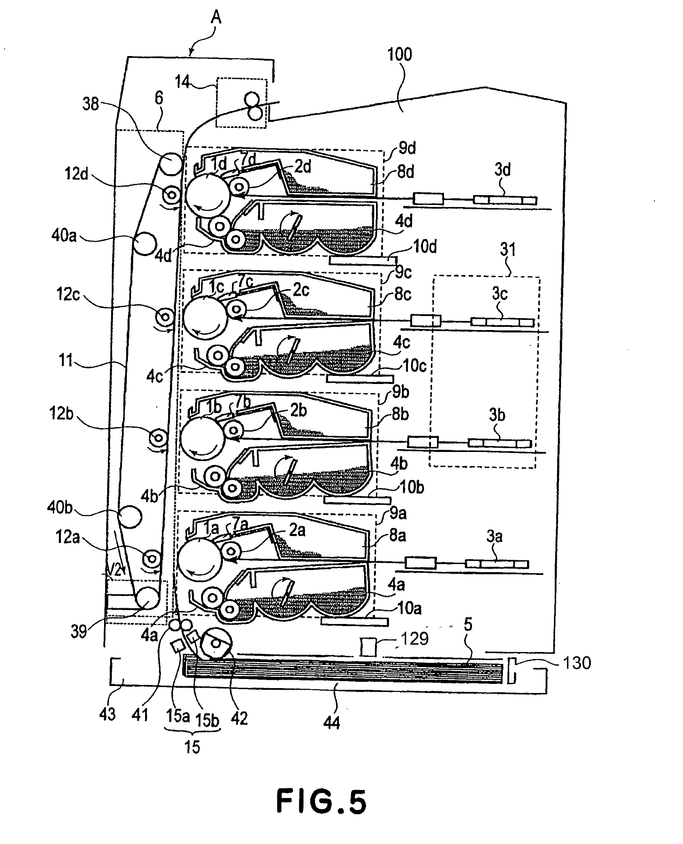

Figure 5 is a schematic sectional drawing of the electrophotographic image forming apparatus in accordance with the present invention, in the second monochromatic mode, showing the general structure thereof.
Figure 6 is a block diagram for controlling the electrophotographic image forming apparatus in accordance with the present invention.
Figure 7 is a flowchart for the control system of the electrophotographic image forming apparatus in accordance with the present invention.
Figure 8 is a schematic perspective drawing of the electrophotographic image forming apparatus in accordance with the present invention.

### DETAILED DESCRIPTION OF THE PREFERRED EMBODIMENTS

Hereinafter, the image forming apparatus in accordance with the present invention will be described in detail with reference to the appended drawings. The preferred embodiments, which will be described below, are intended to be used only for concretely describing the present invention. Thus, the measurements, materials, and shapes of the structural components of the image forming apparatuses in the following embodiments of the present invention, and their positional relationships, are not intended for limiting the scope of the present invention, unless specifically noted.

### [General Structure of Image Forming Apparatus]

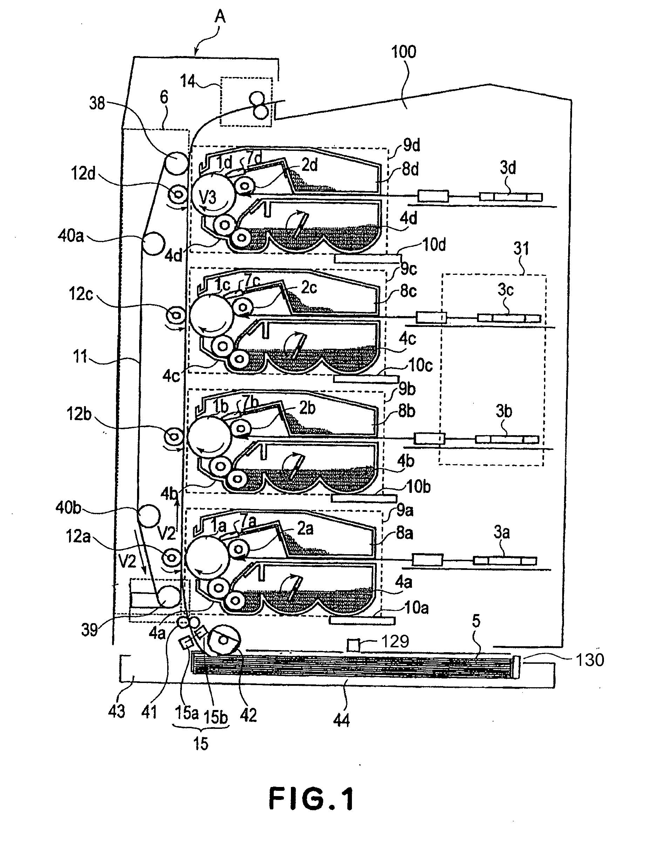

Figure 1 shows an electrophotographic multicolor (four color) image forming apparatus A (which hereinafter will be referred to simply as image forming apparatus A), that is, a type of electrophotographic image forming apparatus, in the first embodiment of the present invention.

The image forming apparatus A in Figure 1 is a color printer of an inline type. It has four photosensitive drums 1 (1a, 1b, 1c, and 1d) as electrophotographic photosensitive members, which are disposed so that they are vertically stacked in parallel to each other. In the adjacencies of the peripheral surface of each photosensitive drum 1, a charge roller 2 (2a, 2b, 2c, or 2d) for charging the peripheral surface of the photosensitive drum 1 to a predetermined potential level, a scanner unit 3 (3a, 3b, 3c, or 3d) for projecting a beam of laser light, while modulating the beam with image formation data, to form an electrostatic latent image on the peripheral surface of the photosensitive drum 1, a development unit 4 (4a, 4b, 4c, or 4d) for adhering toner to the electrostatic latent image to develop it into a toner image, or the image formed of toner, a transferring apparatus 6 for transferring the toner image on the photosensitive drum 1 onto a recording medium 5, a cleaning apparatus 7 (7a, 7b, 7c, or 7d) for removing the transfer residual toner, that is, the toner remaining on the peripheral surface of the photosensitive drum 1 after the transfer, etc., are disposed in a manner to surround the photosensitive drum 1.

In this embodiment, the process cartridge 9 (9a, 9b, 9c, and 9d) (which hereinafter may be referred to simply as cartridge) comprises the photosensitive drum 1, charge roller 2, development unit 4, and cleaning apparatus 7, which are integrally disposed in the cartridge 9. The charge roller 2, development unit 4, and cleaning apparatus 7 are means for processing the photosensitive drum 1. The process cartridges 9 are removably mountable in the main assembly 100 of the image forming apparatus.

Also in this embodiment, all cartridges 9 (9a, 9b, 9c, and 9d) are the same in shape, and contain yellow, cyan, magenta, and black color toners, respectively.

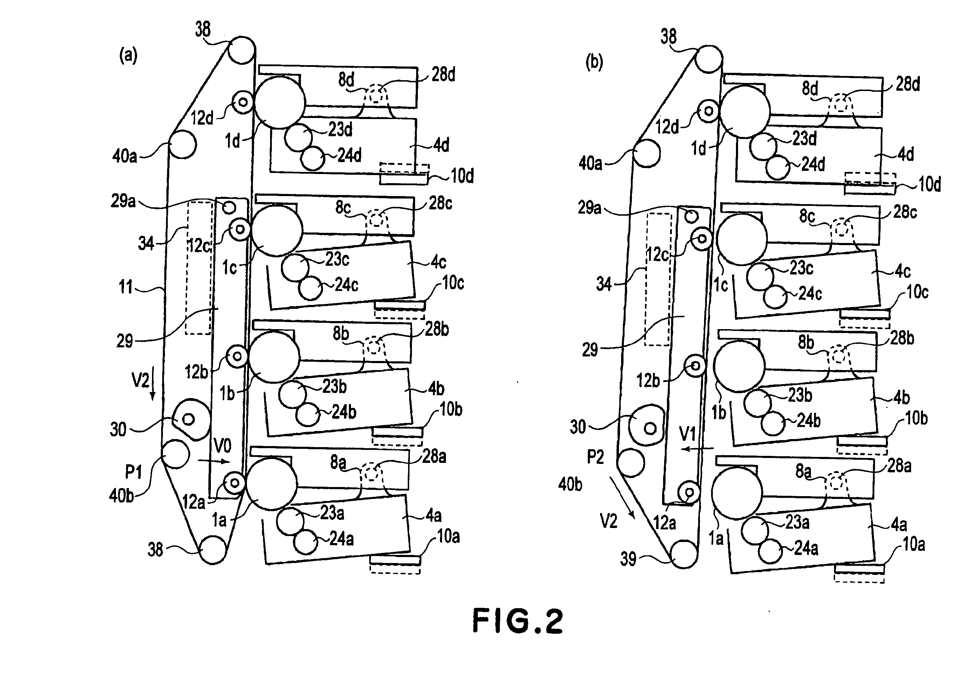

A conveyer belt 11 for conveying the recording medium 5 is disposed so that it faces the photosensitive drum of each of the cartridges 9. The transfer rollers 12 (12a, 12b, 12c, and 12d) are transferring members, which are in contact with the inward surface of the conveyer belt 11, in terms of the loop the conveyer belt 11 forms, and are disposed in parallel so that they overlap in the moving direction of the conveyer belt 11 (recording medium 5). Referring to Figures 2(a) and 2(b), the transfer rollers 12a, 12b, and 12c are rotatably attached to the transfer roller unit 29, which is attached to the frame of the main assembly 100 of the image forming apparatus A so that it can be rotated about the transfer roller unit supporting portion 29a. As for the transfer roller 12d, it is directly and rotatably attached to the frame of the main assembly 100 of the image forming apparatus A.

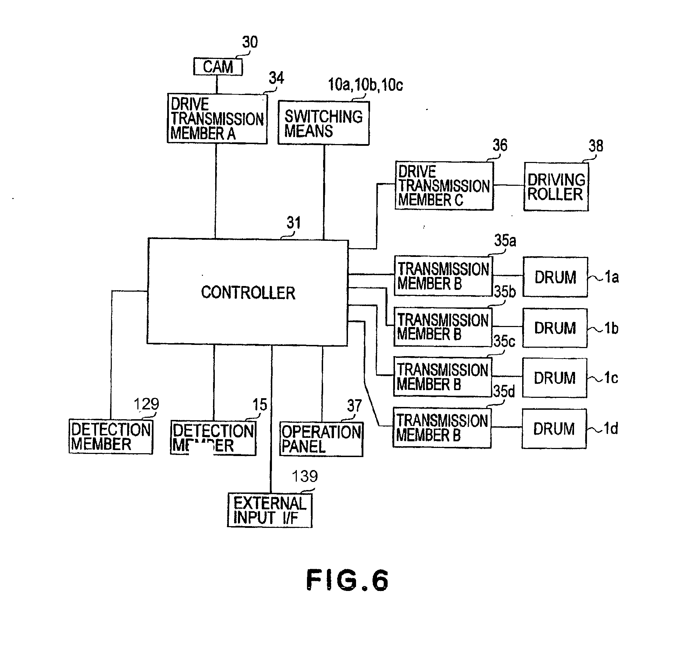

Referring to Figure 2(a), as a cam 30 is rotated into the angle P1 in which it contacts the transfer roller unit 29, the transfer roller unit 29 is moved into the position in which it keeps the conveyer belt 11 in contact with the photosensitive drums 1a, 1b, and 1c, and also, in which it keeps the transfer rollers 12a, 12b, and 12c pressed against the photosensitive drums 1a, 1b, and 1c, with the conveyer belt 11 pinched between the transfer rollers 12a, 12b, and 12c and the photosensitive drums 1a, 1b, and 1c, respectively (first position). Next referring to Figure 2(b), as the cam 30 is rotated into the angle P2 in which it does not contact the transfer roller unit 29, the transfer roller unit 29 is rotated in the clockwise direction (V1 direction) about the supporting portion 29a from the position shown in Figure 2(a). As a result, the transfer rollers 12a, 12b, and 12c are moved away from the photosensitive drums 1a, 1b, and 1c, respectively, and also, the conveyer belt 11 is moved by its own tension to the position (second position) in which it does not contact the photosensitive drums 1a, 1b, and 1c. Referring to Figure 6, as for the control of the rotation of the cam 30, the driving force transmitting member A34 (unshown) is activated by the control portion 31 of the image forming apparatus A to stop the cam 30 in the first or second angle (P1 or P2). As the driving force transmitting member A34, a stepping motor (unshown) or a clutch (unshown) connected to the cam 30 is employed.

The conveyer belt 11 in this embodiment is roughly 700 mm in circumference, and 150 µm in thickness. It is stretched around four rollers, which are a driver roller 38, a follower rollers 40a and 40b, and a tension roller 39. Thus, as the driver roller 38 is rotated by a motor (unshown), the conveyer belt 11 is circularly moved in the direction indicated by an arrow mark V2 as shown in Figure 1. While the conveyer belt 11 is circularly moved, and therefore, the recording medium 5 is conveyed from the tension roller 39 side to the driver roller 38 side, toner images are transferred onto the recording medium 5.

A sheet feeding portion 43 is for feeding the recording medium 5 into the image forming portion. It comprises a cassette 44, in which a plurality of recording mediums 5 are stored. During an image forming operation, the feed roller 42 is rotated in synchronism with the progression of the image forming operation, feeding the recording mediums 5 from the cassette 44 into the main assembly 100, while separating one by one the recording mediums 5. After being fed into the main assembly 100, each recording medium 5 is temporarily held up by a registration shutter 41, as its leading edge comes into contact with the registration shutter 41. As a result, the recording medium 5 temporarily arches. Then, it is released by the registration shutter 41 on to the conveyer belt 11 so that the arrival of the transfer starting line on the recording medium 5 at the contact area between the conveyer belt 11 and photosensitive drum 1 coincides with the arrival of the leading end of the toner image on the photosensitive drum 1 at the contact area.

A fixing apparatus 14 is an apparatus for fixing a toner image to the recording medium 5 after the toner image is transferred onto the recording medium 5. After the transfer of the toner image onto the recording medium 5, the recording medium 5 is moved through the fixing apparatus 14. While the recording medium 5 is moved through the fixing apparatus, heat and pressure is applied to the combination of the recording medium 5 and the toner image thereon. As a result the toner image is permanently fixed to the surface of the recording medium 5.

### [Structure of Process Cartridge]

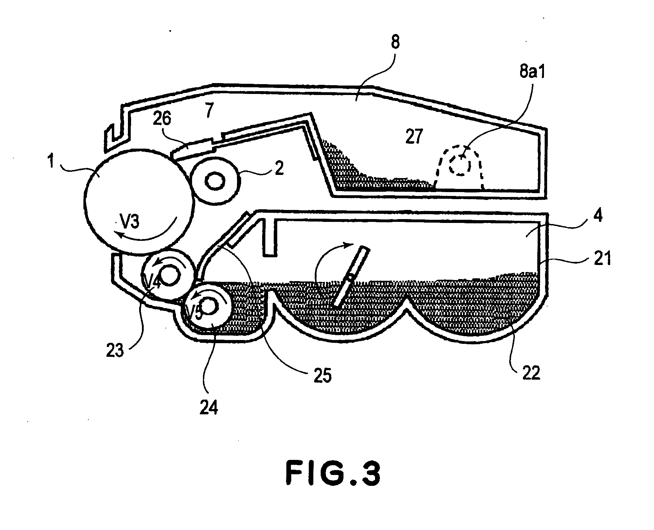

Next, referring to Figure 3, the cartridge 9 will be described. The cartridge 9 is separable into the cleaning unit 8 (8a, 8b, 8c, or 8d) and development unit 4 (4a, 4b, 4c, or 4d). The cleaning unit 8 has the photosensitive drum 1, charge roller 2, cleaning apparatus 7, and toner storage container 27. The development unit 4 has the development roller 23, development blade 25, and an elastic roller 24. The cleaning unit 8 and development unit 4 are connected to each other so that they can pivot about the connective portion between the two. There is a pair of springs (unshown) between the cleaning unit 8 and development unit 4 so that the photosensitive drum 1 and development roller 23 are kept in contact with each other by the force from the pair of springs. Referring to Figure 2, as each of the switching means 10 (10a, 10b, and 10c) is moved upward, it comes into contact with the development unit 4 (4a, 4b, and 4c), and causes the development unit 4 to pivot about the supporting portion 28. As a result, the photosensitive drum 1 and the development roller 23 become separated. On the other hand, as the switching means 10 (10a, 10b, and 10c) is moved downward, it allows the development unit 4 (4a, 4b, and 4c) to pivot about the supporting portion 28. As a result, the switching means 10 becomes separated from the development unit 4. Therefore, the photosensitive drum 1 and development roller 23 come into contact with each other. In other words, the switching means 10 (10a, 10b, and 10c) is capable of switching the positional relationship between the photosensitive drum 1 and development unit 4 between the state in which the photosensitive drum 1 and development unit 4 are in contact with each other, and the state in which the two are not in contact with each other. As for the vertical movement of the switching means 10 (10a, 10b, and 10c), it is controlled by the control portion 31 as shown in Figure 6.

Next, each of the essential structural elements of the cartridge 9 will be described in detail.

First, the photosensitive drum 1 comprises an aluminum cylinder, and a photosensitive layer coated on the peripheral surface of the aluminum cylinder. Referring to Figures 1 and 3, the photosensitive drum 1 is rotated in the direction indicated by the arrow mark V3.

As the charge roller 2, a charge roller compatible with a contact charging method is employed. The charge roller 2 is an electrically conductive roller, and is placed in contact with the photosensitive drum 1. As charge bias is applied to the charge roller 2, the peripheral surface of the photosensitive drum 1 is uniformly charged.

The development unit 4 comprises: the development roller 23 which is rotated in contact with the photosensitive drum 1, in the direction indicated by an arrow mark V4; and developer container 21 in which nonmagnetic toner 22 (which hereinafter may be referred to simply as toner) as single-component developer, the inherent polarity of which is negative, is stored. The developer container 21, which opposes the photosensitive drum 1, is provided with a hole 28, through which the development roller 23 is supplied with the toner 22, and which extends in the direction parallel to the lengthwise direction of the photosensitive drum 1 (development roller 23) so that the entire lengthwise range of the development roller 23 is supplied with the toner 22. The development roller 23 as a developer bearing means (developing means) is disposed in a manner of covering this hole 28. During an image forming operation, the development roller 23 is kept in contact with the photosensitive drum 1 so that it appears as if the development roller 23 invaded into the photosensitive drum 1 by a predetermine distance. The development roller 23 is rotated in the direction indicated by the arrow mark V4.

The development unit 4 is also provided with the elastic roller 24, which is placed in contact with the development roller 23 to supply the development roller 23 with the toner 22, and also, to strip away from the development roller 23 the toner which was not used for development. The elastic roller 24 is rotatably supported by the developer container 21. As for the material of the roller proper of the elastic roller 24, foamed rubber is used to efficiently supply the development roller 23 with the toner 22, and also, to strip the residual toner from the development roller 23. The elastic roller 24 is rotated in the direction indicated by an arrow mark V5, which is the same as the direction as the development roller 23 is rotated.

Further, the development unit 4 is provided with the development blade 25 for regulating the amount by which the toner is allowed to be borne on the development roller 23. The development blade 25 is a piece of thin plate of phosphor bronze, which is elastic. It is disposed so that its free edge and the adjacencies of the free edge are placed in contact with the peripheral surface of the development roller 23. As the peripheral surface of the development roller 23 is rubbed by the peripheral surface of the elastic roller 24, the toner 22 is borne on the peripheral surface of the development roller 23, and is moved to the contact area between the development roller 23 and development blade 25. Then, as the toner on the peripheral surface of the development roller 23 is moved through the contact area, the toner is formed into a uniform layer with a predetermined thickness, while being frictionally charged.

To the development roller 23 in the development unit 4, a DC bias (development bias) of a predetermined value is applied. As a result, the toner is adhered to the exposed points of the uniformly charged peripheral surface of the photosensitive drum 1 by the electrostatic force generated by the difference in potential level between the development roller 23 and the exposed points of the peripheral surface of the photosensitive drum 1; the latent image on the peripheral surface of the photosensitive drum 1 is reversely developed.

The photosensitive drum 1 is continuously rotated while the toner image is formed. Therefore, the portion of the peripheral surface of the photosensitive drum 1, across which the toner image has been formed, is brought by the rotation of the photosensitive drum 1 to the transfer portion, in which the transfer roller 12 (12a, 12b, 12c, or 12d) are kept pressed against the peripheral surface of the photosensitive drum 1 (1a, 1b, 1c, or 1d), with the conveyer belt 11 pinched between the photosensitive drum 1 and transfer roller 12, and is moved through the transfer portion. While the portion of the peripheral surface of the photosensitive drum 1, across which the toner image has been form, is moved through the transfer portion, the toner image is transferred onto the recording medium 5 delivered to the transfer portion while remaining electrostatically adhered to the conveyer belt 11. The toner which remained on the photosensitive drum 1, that is, the toner which was not transferred onto the recording medium 5, is removed from the photosensitive drum 1 by the cleaning apparatus 7, which comprises a cleaning blade 26 and the toner storage container 27. The cleaning blade 26 is kept pressed on the peripheral surface of the photosensitive drum 1 so that a predetermined amount of contact pressure is maintained between the cleaning blade 26 and photosensitive drum 1. It removes the residual toner on the peripheral surface of the photosensitive drum 1 by mechanically scraping the peripheral surface of the photosensitive drum 1. The removed toner is stored in the toner storage container 27.

### [Mounting of Process Cartridge into Image Forming Apparatus Main Assembly, and Removal of Process Cartridge therefrom]

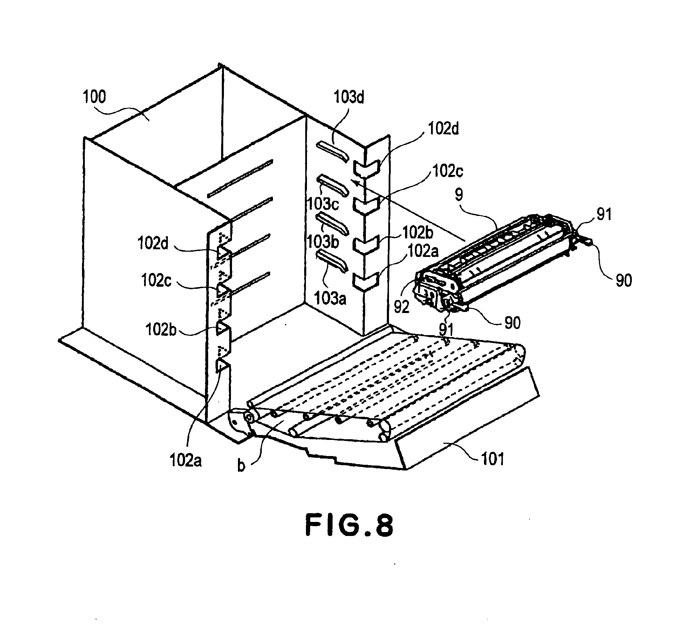

Next, referring to Figure 8, the method for mounting the cartridge 9 into the main assembly 100 of the image forming apparatus, and the method for removing the cartridge 9 from the main assembly 100 will be described. As will be evident from Figure 8, the main assembly 100 is provided with a front door 101, which is hinged so that it can be rotationally opened or closed. To the front door 101, a transferring apparatus 6 is pivotally attached. The cartridge 9 can be mounted into the main assembly 100 of the image forming apparatus, or removed therefrom, only when the front door 1 is open. The cartridge 9 is provided with a pair of handles 90, which are located at the lengthwise ends of the cartridge 9, one for one, and are to be grasped to mount or dismount the cartridge 9. When mounting the cartridge 9 into the main assembly 100, it is to be inserted into the main assembly so that the pair of insertion guides 92 of the cartridge 9, and the pair of cartridge positioning portion 91 of the cartridge 9, are fitted into the pair of guide rails 103 (103a, 103b, 103c, or 103d) of the main assembly 100, and pair of cartridge positioning portions 102 (102a, 102b, 102c, or 102d) of the main assembly 100, respectively.

### [Full-color Mode]

Next, the operation of the image forming apparatus in this embodiment in the full-color mode will be described.

The full-color mode is a mode in which an image is formed with the use of all four cartridges 9 different in the color of the toner they contain. The switching between the monochromatic mode, which will be described later, and the full-color mode is automatically done by the control portion 31, which makes mode selection based on the signals sent from a personal computer (unshown) connected to the image forming apparatus through an external input IF (interface) 139.

Referring to Figure 1, when the image forming apparatus A is in the full-color mode, the photosensitive drums 1 (1a, 1b, 1c, and 1d) are kept pressed against the transfer roller 12 (12a, 12b, 12c, and 12d), with the conveyer belt 11 pinched between the photosensitive drums 1 and transfer rollers 12, respectively. Further, all photosensitive drums 1 (1a, 1b, 1c, and 1d) are in contact with the development rollers 23 (23a, 23b, 23c, and 23d), respectively. Thus, first, the image formed of the yellow toner is transferred onto the recording medium 5, as the recording medium 5 is conveyed by the conveyed belt 11 in the direction V2. Then, the toner images formed of the cyan, magenta, and black toners, one for one, are sequentially transferred in layers onto the recording medium 5. Thereafter, the recording medium 5 is separated from the conveyer belt 11, and is sent into the fixing apparatus 14, in which the toner images are permanently fixed to the recording medium 5, turning into a single full-color image. In each image forming portion, after the completion of the transfer of the toner image, the switching means 10 is activated to separate the development roller 23 from the photosensitive drum 1, ending the image forming operation. The position of the switching means 10, in which the switching means 10 finishes separating the development roller 23 from the photosensitive drum 1, is the home position of the switching means 10. Thus, when the next image forming operation is started, the switching means is in this home position.

### [Monochromatic Mode]

Next, the monochromatic mode will be described. When the image forming apparatus is in the monochromatic mode, an image is formed with the use of only black toner. The cartridge 9 which contains the black toner is mounted topmost among the vertically stacked four cartridges 9 different in the color of the toner they contain.

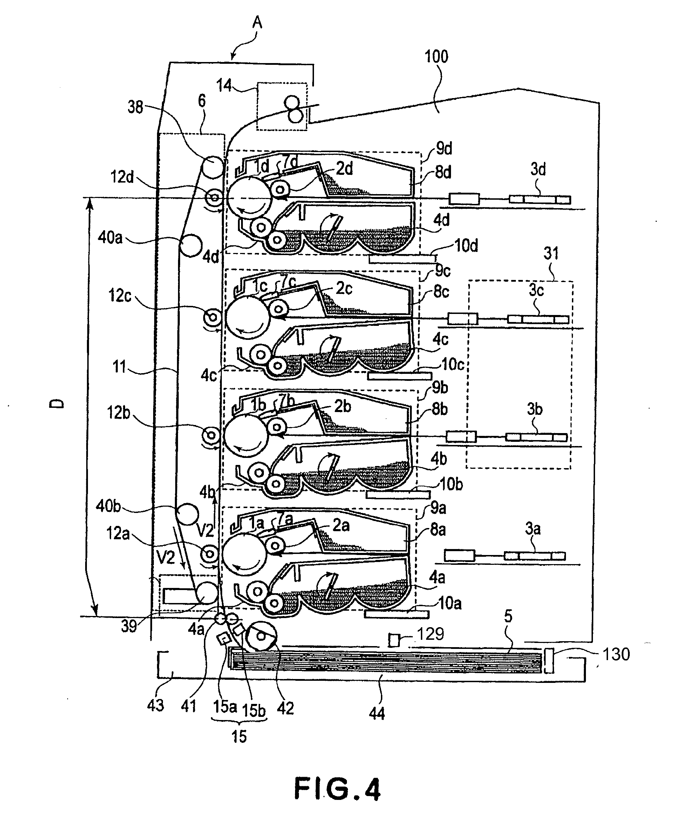

The image forming apparatus in this embodiment is operable in first and second monochromatic modes. The first monochromatic mode is to be selected when a piece of thick paper (no less than 90g/m in basis weight), a short envelop, a Japanese postcard of the standard size (100x148 mm), or the like, is conveyed as the recording medium through the image forming apparatus. The type of the recording medium is detected by detecting means 15 and 129. Whether or not a recording medium is thick paper can be determined based on the transmittance of the recording medium, which can be determined by measuring the amount of the light which comes through the recording medium from an LED positioned on the opposite side of the recording medium. More specifically, referring to Figures 1 and 4, the detecting member 15 has a light projecting portion 15a and a light receiving portion 15b. Thus, the thickness of the recording medium 5 is determined by measuring the amount of the light which comes through the recording medium from the LED while the recording medium 5 is moving between the light projecting portion 15a and light receiving portion 15b. The thickness of the recording medium 5 is measured before the recording medium 5 begins to be conveyed by the pair of registration rollers 41.

The length of the recording medium 5 is measured by the detecting member 129. More specifically, it can be determined by measuring the length of time between when the rotation of the feed roller 42 is started, and when the trailing edge of the recording medium 5 passes the detecting means 129. The length of the recording medium 5 can also be determined by employing a pair of the detecting members 129 and detecting the position of the regulating guide 130 which regulates the trailing edge of the recording medium 5 when the recording medium 5 is in the cassette 43.

However, the thickness and length of the recording medium 5 may be inputted by a user through the control panel of the image forming apparatus, as shown in Figure 6, instead of allowing the control portion 31 to automatically determine based on the outputs of the detecting means 15 and 129. Further, they may be inputted by a user through the external input IF 139 connected to a personal computer (unshown).

In the first monochromatic mode, the cam 30 is made to take the angle P1 (first angle), into which it is moved by pivoting the transfer roller unit 29 in the direction indicated by an arrow mark V0 so that the conveyer belt 11 is placed in contact with the photosensitive drums 1a, 1b, and 1c, and also, so that the transfer rollers 12a, 12b, and 12c are pressed against the photosensitive drums 1a, 1b, and 1c, with the conveyer roller 11 pinched by the transfer rollers 12 and photosensitive drums 1, respectively. Then, the switching means 10 of the only the development roller 23d which uses the black toner is activated to place the development roller 23d in contact with the photosensitive drum 1d from among the development rollers 23.which are kept away from the corresponding photosensitive drums 1 unless the image forming apparatus is forming an image. As for the photosensitive drums 1a, 1b, and 1d, that is, the photosensitive drums 1 other than the photosensitive drum 1d on which an image is formed of the black toner, they are rotated in contact with the conveyer belt 11, without being charged by the charge rollers 2a, 2b, and 2c, respectively. In other words, they play only the role of conveying the recording medium 5. To described in more detail, the cartridge 9d which uses the black toner is located topmost in the image forming apparatus A among the four cartridges 9. Therefore, the electrostatic force alone from the conveyer belt 11 is insufficient to keep the nonstandard recording mediums, such as the abovementioned piece of thick paper, a short envelop, a Japanese postcard, etc., precisely adhered to the conveyer belt 11 until they are delivered to the transfer station between the transfer roller 12d and photosensitive drum 1d. That is, the distance D1 (distance by which recording medium is conveyed) from the pair of registration rollers 41 to the photosensitive drum 1d is rendered longer than the lengths of such nonstandard recording mediums as the above described ones. In this embodiment, however, the image forming apparatus is structured and operated as described above. Therefore, even if the nonstandard mediums such as the abovementioned ones are used as the recording medium 5, the problem that they are conveyed at a slower speed than the normal speed, and/or conveyed askew does not occur. Therefore, the toner images are precisely transferred from the photosensitive drum 1d even onto the nonstandard recording medium. Thus, from the standpoint of improving the image forming apparatus in terms of the precision with which the recording medium is conveyed, it is more effective to set the control portion 31 so that if the recording medium length is no more than D1, the first monochromatic mode is selected.

As for the second monochromatic mode, it is selected when the image forming apparatus is operated in a mode other than the first monochromatic mode. That is, it is used for conveying the standard recording paper, or the recording paper other such nonstandard recording mediums as the abovementioned ones. More specifically, it is used when a monochromatic image is formed on such recording mediums as recording papers of A3, A4, and B5 sizes, recording papers of letter and legal sizes, etc. Referring to Figure 2(a), in the second monochromatic mode, the cam 30 is kept at an angle P2 to prevent the cam 30 from applying pressure upon the transfer roller unit 29. To describe in more detail, as the cam 30 which has been kept at the angle P1 is rotated into the angle P2, the transfer roller unit 29 is allowed to pivot about the supporting portion 29a in the direction indicated by the arrow mark V1. As the transfer roller unit 29 rotates in the arrow V1 direction, the transfer rollers 12a are moved in the arrow V1 direction, becoming thereby separated from the photosensitive drums 1a, 1b, and 1c, respectively, and also, the conveyer belt 11 moves, due to its own tension, to the position (second position) in which it remains separated from the photosensitive drums 1a, 1b, and 1c. Then, only the switching means 10 for the development roller 23d, among the development rollers 23 which have been kept separated from the corresponding development roller 23, is activated to place the development roller 23d in contact with the photosensitive drum 1d. Thus, the development roller is placed in contact with the photosensitive drum 1 only in the cartridge 9d in which an latent image is to be developed. In other words, when the standard recording paper is used as the recording medium 5, the combination of the electrostatic force from the conveyer belt 11 and the conveyance force (friction) from the pair of registration rollers 41 is sufficient to precisely convey the recording medium 5. Therefore, there is no need for keeping the transfer rollers 12a, 12b, and 12c, pressed against the photosensitive drums 1a, 1b, and 1c, with the conveyer belt 11 pinched between the transfer belts 12 and photosensitive drums 1, respectively. Further, it is also unnecessary to driving the photosensitive drums 1a, 1b, and 1c, and therefore, driving force is not transmitted thereto from the main assembly 100 of the image forming apparatus A. In other words, the photosensitive drums 1a, 1b, and 1c, and the development rollers 23a, 23b, and 23c, which are not involved in the formation of a black monochromatic image, are not rotated. Therefore the photosensitive drums 1a, 1b, and 1c, and the development rollers 23a, 23b, and 23c last longer.

In the monochromatic mode in this embodiment, an image is formed of the black toner. However, a monochromatic image may be formed of one of the toners other than the black toner.

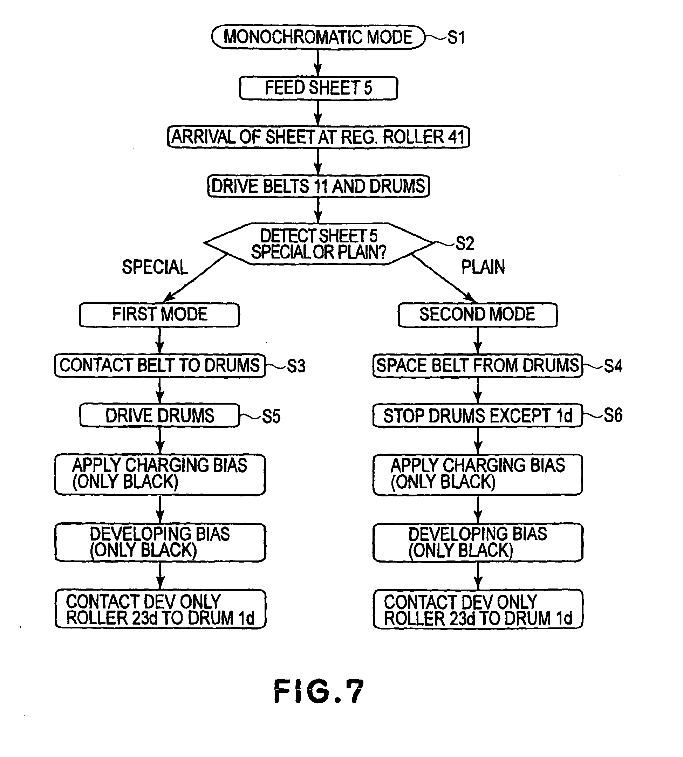

Figure 6 is a block diagram of the control system for controlling the image forming apparatus in this embodiment, and Figure 7 is a flowchart for controlling the image forming apparatus in this embodiment. First, referring to Figure 6, as the monochromatic mode is selected (S1), that is, when the image forming apparatus is in the monochromatic mode, after the recording medium 5 reaches the pair of registration rollers 41, the driving force transmitting members B35 and C36 are activated to simultaneously drive the conveyer belt 11 and photosensitive drums 1. The driving force transmitting members B35 are members for transmitting driving force to the photosensitive drums 1a, 1b, 1c, and 1d, one for one, and are stepping motors (unshown) or clutches (unshown). The driving force transmitting member C36 is a member for transmitting driving force to the driver roller 38, and is a stepping motor (unshown) or a clutch (unshown). At this point in the image forming operation, the photosensitive drum 1 is not in contact with the development roller 23, because the switching means 10 is in the home position.

Next, the signals outputted from the detecting means 15 or 129 are interpreted by the control portion 31. In other words, the control portion 31 determines the type of the recording medium 5 by obtaining the information regarding thickness or length of the recording medium 5, and selects (S2) the first or second monochromatic mode based on the determined type of the recording medium 5 (whether recording medium 5 is nonstandard or standard paper). Incidentally, the mode may be directly selected by a user through the control panel 37 as described before. As the control portion 31 selects the first monochromatic mode, it puts the driving force transmitting member A34 into action, rotating thereby the cam 30 so that the conveyer belt 11 is moved into the first position (S3). It should be noted here that normally, before the beginning of an image forming operation, the photosensitive drums 1 are in contact with conveyer belt 11, and therefore, this step S3 is to be carried out only when the photosensitive drums 1a, 1b, and 1c are not in contact with the conveyer belt 11. Also, as the first monochromatic mode is selected, the driving force transmitting members B35 and C36 are put into action to begin continuously driving the photosensitive drums 1 (S5). Next, charge bias and development bias begin to be applied only to the cartridge 9d among the cartridges 9 in which the development roller 23 is not in contact with the photosensitive drum 1 (S7 and S8). Then, only the switching means 10 for the cartridge 9d is put into action to place the development roller 23d in contact with the photosensitive drum 1d (S9), placing the image forming apparatus in the state shown in Figure 2 (a) .

Next, as the second monochromatic mode is selected, the driving force transmitting member 34 is put into action to rotate the cam 30 so that the conveyer belt 11 is moved back to the second position (S4). The diving force transmitting member 36 is put into action to begin continuously driving the conveyer belt 11. However, the driving force transmitting members B35a, B35b, and B35c are left inactive, whereas the driving force transmitting member B35d is put into action. Therefore, the photosensitive drums 1a, 1b, and 1c are not rotated, and only the photosensitive drum 1d, or the photosensitive drum 1 to be developed with the black toner, is rotated (S6). Then, the charge bias and development bias are applied to the cartridge 9d, or the cartridge for forming an image with the use of the black toner, among the cartridges 9 in which the development roller 23 is not in contact with the photosensitive drum 1 (S10 and S11). Next, only the switching means 10 for the cartridge 9d, or the cartridge having the photosensitive drum 1d and development roller 23d, which form an image with the use of the black toner, is put into action, among the cartridges 9 in which the development roller 23 is not in contact with the photosensitive drum 1, in order to place the development roller 23d in contact with the photosensitive drum 1d (S12), placing thereby the image forming apparatus in the state shown in Figure 2 (b) .

As described above, this embodiment can increase the selections of the recording mediums 5 usable for image formation. Further, in this embodiment, the method in which the recording medium 5 is conveyed is switched, based on the type of the recording medium 5 used for image formation, and therefore, recording medium is precisely conveyed, and also, an image is precisely formed on the recording medium 5. Also in this embodiment, the photosensitive drums 1 and development rollers 23 are not rotated unless they need to be rotated. Therefore, the photosensitive drums 1 and development roller 23 last longer. Also in this embodiment, an image is precisely transferred onto the recording medium 5.

While the invention has been described with reference to the structures disclosed herein, it is not confined to the details set forth, and this application is intended to cover such modifications or changes as may come within the content of the following claims.

## Claims

1. A color electrophotographic image forming apparatus (A) for forming an image on a recording material (5), said apparatus (A) comprising:
(i) a mounting portion (100, 102, 103) configured to detachably mount a plurality of process cartridges (9a - 9d) each including an electrophotographic photosensitive drum (1a - 1d) and a developing roller (4a - 4d) for developing an electrostatic latent image formed on said electrophotographic photosensitive drum (1a - 1d), wherein said developing roller (4a - 4d) is movable between a contact state where said developing roller (4a - 4d) is contacted to said electrophotographic photosensitive drum (1a - 1d) and a spaced state where said developing roller (4a - 4d) is spaced from said electrophotographic photosensitive drum (1a - 1d), wherein said process cartridges (9a - 9d) are configured to develop the electrostatic latent images with colors different from each other;
(ii) switching means (10a - 10d) configured to switch said developing rollers (4a - 4d) between the contact state and the spacing state when said process cartridges (9a - 9d) are set in said mounting portion (100, 102, 103);
(iii) a feeding belt (11) configured to feed the recording material (5) along all of said electrophotographic photosensitive drums (1a - 1d) of said process cartridges (9a - 9d) set in the mounting portion (100, 102, 103);
(iv) a driving force transmitting member (34) configured to move the feeding belt (11) into a first position for contacting to all of said electrophotographic photosensitive drums of said process cartridges and a second position wherein said feeding belt (11) contacts only the electrophotographic photosensitive drum (1d) of a said process cartridge (9d) which develops the electrostatic latent image for image formation; and
(v) control means (31) configured to determine a kind of the recording material (5) and, in a monochromatic mode operation, to switch in accordance with the determined kind of the recording material (5) between a first mode in which said feeding belt (11) is placed by said driving force transmitting member (34) at said first position and a second mode in which said feeding belt (11) is placed by said driving force transmitting member (34) at said second position;
wherein in the monochromatic mode, the image is formed on the said recording material (5) through development of only one of said process cartridges (9a - 8d), and
wherein in a process cartridge in which no development is performed in the monochromatic mode, said switching means (10a, 10b, 10d) is in the spaced state.

2. An apparatus (A) according to Claim 1, wherein said mounting portion (100, 102, 103) is configured to mount said process cartridges (9a - 9d) at positions arranged substantially in a vertical direction.

3. An apparatus (A) according to Claim 2, wherein said mounting portion (100, 102, 103) has a mounting position for said process cartridge (9d) which is used for the monochromatic mode, which position is above another mounting position for another of said process cartridges (9a - 9d).

4. An apparatus (A) according to Claim 1, wherein said process cartridge (9d) which is used for the monochromatic mode contains a black developer with which the electrostatic latent image is developed.

5. An apparatus according to Claim 1, further comprising detecting means (15, 29) configured to detecting the kind of the recording material (5), wherein said control means (31) is configured to determine the kind of the recording material (5) in accordance with an output of said detecting means (15, 29).

6. An apparatus according to Claim 5, wherein said detecting means (29) is configured to detect a length of the recording material (5) in a feeding direction in which the recording material (5) is fed, wherein said control means (31) is configured to switch, in said monochromatic mode operation, to the first mode when the output of said detecting means (29) is indicative of a length less than a predetermined length and to a second mode when the output of said detecting means (29) is indicative of a length not less than the predetermined length.

7. An apparatus according to Claim 5, wherein said detecting means (15) is configured to detect a thickness of the recording material (5), and wherein said control means (31) is configured to switch, in said monochromatic mode operation, to the first mode when an output of said detecting means (15) is indicative of a thickness not less than a predetermined thickness and to the second mode when the output of said detecting means (15) is indicative of a thickness less than a predetermined thickness.

8. An apparatus according to Claim 1, wherein said control means (31) is configured to prevent, in the second mode, transmission of driving force for driving the electrophotographic photosensitive drums (1a - 1d) from a main assembly (100) of the image forming apparatus (A) to process cartridges (9a - 9c) other than said process cartridge (9d) in which the development is performed in the monochromatic mode.

9. An apparatus according to Claim 1, wherein said feeding belt (11) is configured to attract the recording material (5) thereon.

10. An apparatus according to Claim 6, wherein the predetermined length corresponds to a distance, measured along the feeding direction, from a feeding roller (42) disposed immediately before said feeding belt (11) with respect to a feeding direction of said recording material (5) to a position of contact between said transfer belt (11) and said electrophotographic photosensitive drum (1d) of said process cartridge (9d) in which the development is performed in the monochromatic mode.

11. An apparatus according to Claim 7, wherein the predetermined thickness corresponds to a basis weight of 90 g/m of the recording material (5).

## Patentansprüche

1. Elektrophotographisches Farbbilderzeugungsgerät (A) zur Erzeugung eines Bilds auf einem Aufzeichnungsmaterial (5), wobei das Gerät (A) umfasst:
(i) einen Anbringabschnitt (100, 102, 103), der konfiguriert ist, eine Vielzahl von Prozesskartuschen (9a - 9d) abnehmbar anzubringen, von denen jede eine elektrophotographische photosensitive Trommel (1a - 1d) und eine Entwicklungswalze (4a - 4d) zur Entwicklung eines elektrostatischen latenten Bilds, das auf der elektrophotographischen photosensitiven Trommel (1a - 1d) erzeugt ist, umfasst, wobei die Entwicklungswalze (4a - 4d) zwischen einem Kontaktzustand, bei dem die Entwicklungswalze (4a - 4d) mit der elektrophotographischen photosensitiven Trommel (1a - 1d) in Kontakt ist, und einem beabstandeten Zustand, bei dem die Entwicklungswalze (4a - 4d) von der elektrophotographischen photosensitiven Trommel (1a - 1d) beabstandet ist, bewegbar ist, wobei die Prozesskartuschen (9a - 9d) konfiguriert sind, die elektrostatischen latenten Bilder mit Farben zu entwickeln, die zueinander unterschiedlich sind;
(ii) eine Schalteinrichtung (10a - 10d), die konfiguriert ist, die Entwicklungswalzen (4a - 4d) zwischen dem Kontaktzustand und dem beabstandeten Zustand zu schalten, wenn die Prozesskartuschen (9a - 9d) in den Anbringabschnitt (100, 102, 103) eingesetzt sind;
(iii) einen Zuführriemen (11), der konfiguriert ist, das Aufzeichnungsmaterial (5) entlang aller elektrophotographischer photosensitiver Trommeln (1a - 1d) der Prozesskartuschen (9a - 9d), die in den Anbringabschnitt (100, 102, 103) eingesetzt sind, zuzuführen;
(iv) ein Antriebskraftübertragungselement (34), das konfiguriert ist, den Zuführriemen (11) in eine erste Position zum Kontaktieren aller elektrophotographischer photosensitiver Trommeln der Prozesskartuschen und eine zweite Position zu bewegen, in der der Zuführriemen (11) nur die elektrophotographische photosensitive Trommel (1d) der Prozesskartusche (9d) kontaktiert, die das elektrostatische latente Bild für eine Bilderzeugung entwickelt; und
(v) eine Steuerungseinrichtung (31), die konfiguriert ist, eine Art des Aufzeichnungsmaterials (5) zu bestimmen und in einem monochromatischen Betriebsartbetrieb entsprechend der bestimmten Art des Aufzeichnungsmaterials (5) zwischen einer ersten Betriebsart, in der der Zuführriemen (11) durch das Antriebskraftübertragungselement (34) bei der ersten Position platziert ist, und einer zweiten Betriebsart, in der der Zuführriemen (11) durch das Antriebskraftübertragungselement (34) bei der zweiten Position platziert ist, zu schalten;
wobei in der monochromatischen Betriebsart das Bild auf dem Aufzeichnungsmaterial (5) durch eine Entwicklung lediglich einer der Prozesskartuschen (9a - 8d) erzeugt wird, und
wobei in einer Prozesskartusche, in der keine Entwicklung in der monochromatischen Betriebsart ausgeführt wird, die Schalteinrichtung (10a, 10b, 10d) in dem beabstandeten Zustand ist.

2. Gerät (A) nach Anspruch 1, wobei der Anbringabschnitt (100, 102, 103) konfiguriert ist, die Prozesskartuschen (9a - 9d) bei Positionen anzubringen, die im Wesentlichen in einer vertikalen Richtung angeordnet sind.

3. Gerät (A) nach Anspruch 2, wobei der Anbringabschnitt (100, 102, 103) eine Anbringposition für die Prozesskartusche (9d) aufweist, die für die monochromatische Betriebsart verwendet wird, wobei die Position über einer anderen Anbringposition für eine andere der Prozesskartuschen (9a - 9d) liegt.

4. Gerät (A) nach Anspruch 1, wobei die Prozesskartusche (9d), die für die monochromatische Betriebsart verwendet wird, einen schwarzen Entwickler beinhaltet, mit dem das elektrostatische latente Bild entwickelt wird.

5. Gerät nach Anspruch 1, ferner mit einer Erfassungseinrichtung (15, 29), die konfiguriert ist, die Art des Aufzeichnungsmaterials (5) zu erfassen, wobei die Steuerungseinrichtung (31) konfiguriert ist, die Art des Aufzeichnungsmaterials (5) entsprechend einer Ausgabe der Erfassungseinrichtung (15, 29) zu bestimmen.

6. Gerät nach Anspruch 5, wobei die Erfassungseinrichtung (29) konfiguriert ist, eine Länge des Aufzeichnungsmaterials (5) in einer Zuführrichtung, in der das Aufzeichnungsmaterial (5) zugeführt wird, zu erfassen, wobei die Steuerungseinrichtung (31) konfiguriert ist, in dem monochromatischen Betriebsartbetrieb zu der ersten Betriebsart zu schalten, wenn die Ausgabe der Erfassungseinrichtung (29) eine Länge anzeigt, die kleiner als eine vorbestimmten Länge ist, und zu einer zweiten Betriebsart zu schalten, wenn die Ausgabe der Erfassungseinrichtung (29) eine Länge anzeigt, die nicht kleiner als die vorbestimmte Länge ist.

7. Gerät nach Anspruch 5, wobei die Erfassungseinrichtung (15) konfiguriert ist, eine Dicke des Aufzeichnungsmaterials (5) zu erfassen, und wobei die Steuerungseinrichtung (31) konfiguriert ist, in dem monochromatischen Betriebsartbetrieb zu der ersten Betriebsart zu schalten, wenn eine Ausgabe der Erfassungseinrichtung (15) eine Dicke anzeigt, die nicht kleiner als eine vorbestimmte Dicke ist, und zu der zweiten Betriebsart zu schalten, wenn die Ausgabe der Erfassungseinrichtung (15) eine Dicke anzeigt, die kleiner als eine vorbestimmte Dicke ist.

8. Gerät nach Anspruch 1, wobei die Steuerungseinrichtung (31) konfiguriert ist, in der zweiten Betriebsart eine Übertragung einer Antriebskraft zum Antreiben der elektrophotographischen photosensitiven Trommeln (1a - 1d) von einer Hauptbaugruppe (100) des Bilderzeugungsgeräts (A) zu Prozesskartuschen (9a - 9c), die zu der Prozesskartusche (9d) unterschiedlich sind, in der die Entwicklung in der monochromatischen Betriebsart ausgeführt wird, zu verhindern.

9. Gerät nach Anspruch 1, wobei der Zuführriemen (11) konfiguriert ist, das Aufzeichnungsmaterial (5) zu sich anzuziehen.

10. Gerät nach Anspruch 6, wobei die vorbestimmte Länge einer Entfernung, die entlang der Zuführrichtung gemessen wird, von einer Zuführwalze (42), die unmittelbar vor dem Zuführriemen (11) in Bezug auf eine Zuführrichtung des Aufzeichnungsmaterials (5) angeordnet ist, zu einer Position eines Kontakts zwischen dem Übertragungsriemen (11) und der elektrophotographischen photosensitiven Trommel (1d) der Prozesskartusche (9d), in der die Entwicklung in der monochromatischen Betriebsart ausgeführt wird, entspricht.

11. Gerät nach Anspruch 7, wobei die vorbestimmte Dicke einem Basisgewicht von 90 g/m des Aufzeichnungsmaterials (5) entspricht.

## Revendications

1. Appareil (A) à électrophotographie de formation d'image en couleurs destiné à former une image sur une matière d'enregistrement (5), ledit appareil (A) comprenant :
(i) une partie de montage (100, 102, 103) constituée pour recevoir de façon amovible une pluralité de cartouches de traitement (9a à 9d) chacune incluant un tambour photosensible (1a à 1d) à électrophotographie et un rouleau de développement (4a à 4d) destiné à développer une image latente électrostatique formée sur ledit tambour photosensible (1a à 1d) à électrophotographie, dans lequel ledit rouleau de développement (4a à 4d) est mobile entre un état en contact où ledit rouleau de développement (4a à 4d) contacte ledit tambour photosensible (1a à 1d) à électrophotographie et un état écarté où ledit rouleau de développement (4a à 4d) est espacé dudit tambour photosensible (1a à 1d) à électrophotographie, dans lequel lesdites cartouches de traitement (9a à 9d) sont constituées pour développer les images latentes électrostatiques avec des couleurs différentes les unes des autres ;
(ii) un moyen (10a à 10d) de changement constitué pour changer lesdits rouleaux de développement (4a à 4d) entre l'état en contact et l'état écarté lorsque lesdites cartouches de traitement (9a à 9d) sont placées dans ladite partie de montage (100, 102, 103) ;
(iii) une bande (11) d'alimentation constituée pour délivrer la matière d'enregistrement (5) le long de tous lesdits tambours photosensibles (1a à 1d) a électrophotographie desdites cartouches de traitement (9a à 9d) placées dans la partie de montage (100, 102, 103) ;
(iv) un organe (34) de transmission de force d'entraînement constitué pour amener la bande (11) d'alimentation dans une première position pour contacter tous lesdits tambours photosensibles à électrophotographie desdites cartouches de traitement et dans une seconde position dans laquelle ladite bande (11) d'alimentation contacte seulement le tambour photosensible (1d) à électrophotographie d'une dite cartouche de traitement (9d) qui développe l'image latente électrostatique pour formation d'image ; et
(v) un moyen (31) de commande constitué pour déterminer un type de matière d'enregistrement (5) et, en mode de fonctionnement monochrome, pour changer en fonction du type déterminé de matière d'enregistrement (5) entre un premier mode dans lequel ladite bande (11) d'alimentation est placée par ledit organe (34) de transmission de force d'entraînement à ladite première position et un second mode dans lequel ladite bande (11) d'alimentation est placée par ledit organe (34) de transmission de force d'entraînement à ladite seconde position,
dans lequel, en mode monochrome, l'image est formée sur ladite matière d'enregistrement (5) par le développement de seulement l'une desdites cartouches de traitement (9a à 8d), et
dans lequel, dans une cartouche de traitement dans laquelle aucun développement n'est effectué en mode monochrome, ledit moyen (10a, 10b, 10d) de changement est à l'état écarté.

2. Appareil (A) selon la revendication 1, dans lequel ladite partie de montage (100, 102, 103) est constituée pour monter lesdites cartouches de traitement (9a à 9d) à des positions agencées pratiquement dans la direction verticale.

3. Appareil (A) selon la revendication 2, dans lequel ladite partie de montage (100, 102, 103) possède une position de montage pour ladite cartouche de traitement (9d) qui est utilisée pour le mode monochrome, laquelle position est au-dessus d'une autre position de montage pour une autre desdites cartouches de traitement (9a à 9d).

4. Appareil (A) selon la revendication 1, dans lequel ladite cartouche de traitement (9d) qui est utilisée pour le mode monochrome contient un révélateur noir à l'aide duquel l'image latente électrostatique est développée.

5. Appareil selon la revendication 1, comprenant en outre un moyen (15, 29) de détection constitué pour détecter le type de la matière d'enregistrement (5), dans lequel ledit moyen (31) de commande est constitué pour déterminer le type de la matière d'enregistrement (5) d'après une sortie dudit moyen (15, 29) de détection.

6. Appareil selon la revendication 5, dans lequel ledit moyen (29) de détection est constitué pour détecter la longueur de la matière d'enregistrement (5) dans la direction de défilement suivant laquelle défile la matière d'enregistrement (5), dans lequel ledit moyen (31) de commande est constitué pour changer, dans ledit mode de fonctionnement monochrome, pour le premier mode lorsque la sortie dudit moyen (29) de détection est représentative d'une longueur plus petite qu'une longueur prédéterminée et pour le second mode lorsque la sortie dudit moyen (29) de détection est représentative d'une longueur pas plus petite que la longueur prédéterminée.

7. Appareil selon la revendication 5, dans lequel ledit moyen (15) de détection est constitué pour détecter l'épaisseur de la matière d'enregistrement (5), et dans lequel ledit moyen (31) de commande est constitué pour changer, dans ledit mode de fonctionnement monochrome, pour le premier mode lorsque la sortie dudit moyen (15) de détection est représentative d'une épaisseur par plus petite qu'une épaisseur prédéterminée et pour le second mode lorsque la sortie dudit moyen (15) de détection est représentative d'une épaisseur plus petite qu'une épaisseur prédéterminée.

8. Appareil selon la revendication 1, dans lequel ledit moyen (31) de commande est constitué pour empêcher, dans le second mode, la transmission de la force d'entraînement destinée à entraîner les tambours photosensibles (1a à 1d) à électrophotographie depuis un ensemble principal (100) de l'appareil (A) de formation d'image aux cartouches de traitement (9a à 9c) autres que ladite cartouche de traitement (9d) dans laquelle le développement se fait en mode monochrome.

9. Appareil selon la revendication 1, dans lequel ladite bande (11) d'alimentation est constituée pour attirer sur elle la matière d'enregistrement (5).

10. Appareil selon la revendication 6, dans lequel la longueur prédéterminée correspond à la distance, mesurée suivant la direction de défilement, d'un rouleau d'alimentation (42) disposé immédiatement avant ladite bande (11) d'alimentation par rapport au sens de défilement de ladite matière d'enregistrement (5) jusqu'à la position de contact entre ladite bande (11) de transfert et ledit tambour photosensible (1d) à électrophotographie de ladite cartouche de traitement (9d) dans laquelle le développement se fait en mode monochrome.

11. Appareil selon la revendication 7, dans lequel l'épaisseur prédéterminée correspond à un grammage de 90 g/m² de la matière d'enregistrement (5).
